# EUROPÄISCHE PATENTSCHRIFT

(11) **EP 3 771 586 B1**
(45) Veröffentlichungstag und Bekanntmachung des Hinweises auf die Patenterteilung: **01.06.2022**
(21) Anmeldenummer: 20188053.1
(22) Anmeldetag: 28.07.2020
(51) Int. Cl.: B60K 15/04

(54) **EINFÜLLSTUTZEN**
FILLER PIPE
COL DE REMPLISSAGE

(30) Priorität: 01.08.2019 DE 102019120841; 16.03.2020 DE 102020107169
(43) Veröffentlichungstag der Anmeldung: 03.02.2021
(73) Patentinhaber: Illinois Tool Works INC., Glenview, IL 60025 (US)
(72) Erfinder: KLUG, Julian, Glenview, Illinois, 60025 (US)
(74) Vertreter: Trinks, Ole

(56) Entgegenhaltungen:
- EP-A2- 1 371 512
- EP-B1- 1 712 398
- DE-A1-102014 111 834
- US-A1- 2017 297 426

## Beschreibung

Die Erfindung bezieht sich auf einen Einfüllstutzen für das Einfüllen eines Betriebsstoffes, wie beispielsweise Kraftstoff oder AdBlue^{®} bzw. Harnstoff, oder eines Zusatzstoffes, wie beispielsweise Wasser, in einen Fahrzeugtank.

Die Erfindung betrifft ferner ein Kraftstoffeinfüllsystem mit einem derartigen Einfüllstutzen, wobei das Kraftstoffeinfüllsystem insbesondere ein deckelloses Kraftstoffeinfüllsystem ist und einen Fehlbetankungsschutz aufweisen kann. Die Erfindung ist jedoch nicht auf deckellose Kraftstoffeinfüllsysteme beschränkt; vielmehr eignet sich der Einfüllstutzen auch für konventionelle Kraftstoffeinfüllsysteme mit Schraub- oder Steckdeckel.

Gemäß einem Aspekt der vorliegenden Erfindung betrifft diese insbesondere ein Einfüllsystem für einen Betriebsstoff- oder Zusatzstofftank, insbesondere Kraftstoff-, AdBlue^{®}- oder Wassertank, mit einem Einfüllstutzen. Der Einfüllstutzen kann gemäß Ausführungsformen der Erfindung mindestens ein Verschlusselement insbesondere in Gestalt einer Verschlussklappe aufweisen, das bzw. die insbesondere federbelastet in eine eine Öffnung verschließende Verschlussstellung beaufschlagt ist, wobei die Verschlussklappe durch ein Einführen der Betriebsstoff- oder Zusatzstoffzapfpistole in den Einfüllstutzen aus der Verschlussstellung in eine die Öffnung zumindest teilweise freigebende Öffnungsstellung verschwenkbar ist.

Ein solches Einfüllsystem für einen Betriebsstoff- oder Zusatzstofftank von beispielsweise einem Kraftfahrzeug (z.B. PKW oder LKW) wird auch als "capless" bezeichnet, da durch das Verschlusselement (Verschlussklappe), das mittels der Betriebsstoff- oder Zusatzstoffzapfpistole selbst geöffnet wird, und das selbsttätig wieder schließt, ein manuell zu lösender bzw. zu befestigender Deckel entfallen kann.

Der Einfüllstutzen ist ausgebildet, in die Karosseriestruktur des Kraftfahrzeuges integriert zu werden, um eine fluidleitende Anbindung an den Betriebsstofftank zu bilden. Der Innenbereich des Einfüllstutzens sorgt insbesondere für eine spielarme Führung und Halterung des eingesteckten Teils der Betriebsstoff- oder Zusatzstoffzapfpistole.

Andererseits ist es bekannt, insbesondere Zapfpistolen für Ottokraftstoff einerseits und Dieselkraftstoff andererseits mit einem unterschiedlichen Durchmesser zu versehen. Diese Maßnahme wurde eingeführt, nachdem bleifreier Ottokraftstoff von verbleitem Kraftstoff unterschieden werden musste. Die Zapfpistolen für bleifreien Ottokraftstoff haben einen kleineren Außendurchmesser als die Zapfpistolen für verbleiten Kraftstoff und für Dieselkraftstoff.

Ferner ist es bekannt, als Zapfpistolenführung in dem Einfüllstutzenkörper einen sich beispielsweise in Richtung des Fahrzeugtanks konisch verengenden Einführabschnitt vorzusehen, wobei der Engquerschnitt des Einführabschnitts kleiner als der Querschnitt einer Dieselzapfpistole sein kann. Die Zapfpistolenführung dient dazu, eine in den Einfüllstutzenkörper aufgenommene oder aufzunehmende Zapfpistole in Richtung des Fahrzeugtanks zu führen.

Wenn bei dem Einführabschnitt der Engquerschnitt des Einführabschnitts kleiner als der Querschnitt einer Dieselzapfpistole ist, und wenn ferner der Einfüllstutzen mit einem Verschlusselement (Verschlussklappe) versehen ist, welches mittels der Betriebsstoff- oder Zusatzstoffzapfpistole selbst geöffnet wird, kann eine Fehlbetankungssperre realisiert werden, mit der Wirksam verhindert wird, dass der Fahrzeugtank über den Einfüllstutzen mit Diesel betankt wird. Im Einzelnen kann bei einer solchen Konstruktion erreicht werden, dass eine in den Einfüllstutzenkörper eingeführte Dieselzapfpistole nicht in Kontakt mit einer Verschlussklappe bzw. einem Verschlusselement gelangen kann, welches dem Fahrzeugtank zugewandten Endbereich des Einfüllstutzenkörpers zugeordnet ist, und welches in seiner Schließstellung den Durchgang zum Fahrzeugtank schließt.

Dies gilt selbstverständlich nur für den Fall, wenn die Zapfpistolen für Ottokraftstoff einen kleineren Außendurchmesser als die Zapfpistolen für Dieselkraftstoff haben.

Wenn somit eine Dieselkraftstoffzapfpistole in den Einfüllstutzen eingeführt wird, öffnet das dem Fahrzeugtank zugewandten Endbereich des Einfüllstutzenkörpers zugeordnete Verschlusselement nicht, so dass der Dieselkraftstoff in dem Einfüllstutzenkörper verbleibt und sich die Zapfpistole automatisch abschaltet. Bekanntlich enthalten Zapfpistolen für Kraftstoff (Diesel oder Benzin) einen Mechanismus, der ein Ventil in der Zapfpistole sperrt, sobald sich ein gewisser Staudruck aufbaut.

Wenn hingegen eine Zapfpistole für Ottokraftstoff in den Einfüllstutzen eingeführt wird, erreicht die Zapfpistole das dem Fahrzeugtank zugewandten Endbereich des Einfüllstutzenkörpers zugeordnete Verschlusselement, so dass dieses entsprechend betätigt wird und von seiner vorgespannten Schließstellung zumindest teilweise geöffnet wird und den Durchgang zum Fahrzeugtank öffnet.

Die bekannten Einfüllstutzen, insbesondere solche, die als "capless" ausgebildet sind und eine entsprechende Fehlbetankungssperre aufweisen, sind vergleichsweise aufwendig herzustellen, da diese aus einer relativ großen Anzahl von Bauelementen bestehen, die nicht nur einzeln hergestellt, sondern auch bei der Montage miteinander verbunden werden müssen.

Dieses Problem liegt auch bei Einfüllstutzen vor, die beispielsweise nicht als "capless" ausgebildet sind und eine Zapfpistolenführung mit einem Einführabschnitt aufweisen zum Führen einer in den Einfüllstutzenkörper aufgenommenen oder aufzunehmenden Zapfpistole in Richtung des Fahrzeugtanks.

Die Druckschrift DE 10 2014 111 834 A1 betrifft eine Einfülleinrichtung für einen Betriebsstofftank mit einem rohrförmigen Außenteil und einem in dem Außenteil aufgenommenen Innenteil, der zur Aufnahme einer Betriebsstoffzapfpistole ausgebildet ist. Die Einfülleinrichtung zeichnet sich dadurch aus, dass der Innenteil eine erste, eine Öffnung aufweisende Stirnwand und eine zweite, eine Öffnung aufweisende Stirnwand umfasst, wobei die Stirnwände über einen Mantel miteinander verbunden sind, und wobei der Mantel über die gesamte Länge zwischen den Stirnwänden mit einer Mantelöffnung versehen ist, deren Breite im Wesentlichen der entsprechenden maximalen Innenbreite des Mantels entspricht.

Die Druckschrift US 2017/0297426 A1 betrifft ein Verfahren zum Ausbilden einer Abdeckung eines Kraftstoffeinfüllsystems für ein Fahrzeug.

Die Druckschrift EP 1 371 512 A2 betrifft einen Stutzenabschluss für den Einfüllstutzen eines Flüssigkeitsbehälters mit einem, eine Rückstromsperre aufweisenden Gasauslass für während des Befüllens verdrängte Gasmengen, wobei ein unteres Verschlussmittel den unteren Bereich verschließt, der durch Einschieben einer Eingusstülle geöffnet werden kann.

Der Erfindung liegt die Aufgabe zu Grunde, einen Einfüllstutzen für das Einfüllsystem eines Betriebsstofftanks anzugeben, der möglichst einfach und somit kostengünstig herstellbar ist.

Diese Aufgabe wird durch den Gegenstand des unabhängigen Patentanspruchs 1 gelöst.

Demgemäß betrifft die Erfindung insbesondere einen Einfüllstutzen zum Einfüllen eines Betriebsstoffes, wie etwa Kraftstoff oder AdBlue^{®} bzw. Harnstoff, oder eines Zusatzstoffes, wie etwa Wasser, in einen Fahrzeugtank mittels einer Zapfpistole. Der Einfüllstutzen weist einen Einfüllstutzenkörper auf, welcher in ein zu dem Fahrzeugtank führendes Einfüllrohr aufnehmbar ist. Der Einfüllstutzen weist ferner eine Zapfpistolenführung mit einem Einführabschnitt auf zum Führen einer in den Einfüllstutzenkörper aufgenommenen oder aufzunehmenden Zapfpistole in Richtung des Fahrzeugtanks.

Erfindungsgemäß ist insbesondere vorgesehen, dass der Einfüllstutzenkörper und der Einführabschnitt der Zapfpistolenführung gemeinsam als ein einstückiges Formgussteil, insbesondere Kunststoff-Spritzgussteil, ausgebildet sind.

Um eine in den Einfüllstutzenkörper aufgenommene oder aufzunehmende Zapfpistole in Richtung des Fahrzeugtanks sicher zu führen, weist der Einführabschnitt der Zapfpistolenführung insbesondere eine Formgebung auf, die ausgebildet ist, die in den Einfüllstutzenkörper aufgenommene Zapfpistole umfangsseitig um mehr als 180°, besonders bevorzugt komplett umlaufend, insbesondere ringförmig, zu umgeben.

Der Einführabschnitt kann dabei umfangsseitig zueinander beabstandete Führungsrippen aufweisen, z.B. drei um jeweils 120° versetzt angeordnete Führungsrippen, oder mehr Führungsrippen mit entsprechend kleinerem Versatzwinkel angeordnete Führungsrippen, so dass die Führung der Zapfpistole in Umfangsrichtung lediglich bereichsweise erfolgt.

Innenmaß des Einführabschnitts und Außenmaß des in den Einführabschnitt einzuführenden Bereichs der Zapfpistole sind bevorzugt derart aufeinander abgestimmt, dass wenig Spiel (z.B. weniger als 10 mm, bevorzugt weniger als 5 mm) vorhanden ist und/oder die Zapfpistole den Einführabschnitt beim Einführvorgang und/oder Betankungsvorgang berührt.

Durch das Ausbilden des Einfüllstutzenkörpers und des Einführabschnitts der Zapfpistolenführung als ein gemeinsames, einstückiges Formgussteil und insbesondere Kunststoff-Spritzgussteil wird die Gesamtanzahl der zur Ausbildung des Einfüllstutzens herzustellenden und zu montierenden Bauteile gegenüber den bekannten Einfüllstutzen reduziert. Zudem ist eine Herstellung des Einfüllstutzenkörpers zusammen mit dem Einführabschnitt aus Kunststoff zumindest bei einer Großserienherstellung äußerst kostengünstig umsetzbar.

Durch die erfindungsgemäße Ausgestaltung werden somit der Einfüllstutzenkörper und der Einführabschnitt der Zapfpistolenführung zusammen einstückig ausgebildet. Dabei kann der Einfüllstutzenkörper mit dem Einführabschnitt insbesondere als Formgussbauteil und besonders bevorzugt als Spritzgussbauteil aus Kunststoff ausgebildet sein, wobei gegebenenfalls sogar eine lediglich zweiteilige Gussform zum Einsatz kommen kann.

Um ein Entformen in einer radialen Richtung (bezüglich einer Längsachse des Einfüllstutzenkörpers) zu ermöglichen, ist gemäß einer bevorzugten Realisierung des Einfüllstutzenkörpers vorgesehen, dass der Einführabschnitt der Zapfpistolenführung ein mit dem Einfüllstutzenkörper integral ausgebildetes und im Inneren des Einfüllstutzenkörpers fest mit dem Einfüllstutzenkörper verbundenes erstes Segment sowie mindestens ein weiteres mit dem Einfüllstutzenkörper gelenkig verbundenes zweites Segment aufweist.

Das mindestens eine zweite Segment ist relativ zu dem Einfüllstutzenkörper zwischen einer ersten Position, in welcher das zweite Segment außerhalb des Einfüllstutzenkörpers vorliegt, und einer zweiten Position, in welcher das zweite Segment innerhalb des Einfüllstutzenkörpers vorliegt und zusammen mit dem ersten Segment die Führung einer in den Einfüllstutzen aufgenommenen oder aufzunehmenden Zapfpistole in Richtung des Fahrzeugtanks bildet, verschwenkbar.

In der ersten Position liegt das zweite Segment zumindest mit einem Teil, besonders bevorzugt im Wesentlichen, d.h. bevorzugt mit mindestens 50 % seines Volumens, ganz besonders bevorzugt komplett außerhalb des Einfüllstutzenkörpers vor. In der zweiten Position liegt das zweite Segment zumindest mit einem Teil, besonders bevorzugt im Wesentlichen, d.h. bevorzugt mit mindestens 50 % seines Volumens, ganz besonders bevorzugt komplett innerhalb des Einfüllstutzenkörpers vor.

Dabei ist unter "außerhalb des Einfüllstutzenkörpers" bzw. "innerhalb des Einfüllstutzenkörpers" bevorzugt ein Bereich außerhalb bzw. innerhalb einer bevorzugt kreisförmigen Kontur zu verstehen, welche eine derartige Formgebung, bevorzugt einen derartigen Radius aufweist, dass der Einfüllstutzenkörper mit Hilfe von Dichtelementen entlang dieser Kontur, bevorzugt O-Dichtringen, dichtend in ein Einfüllrohr des Kraftfahrzeugs einsetzbar ist.

Vorzugsweise ist das zweite Segment des Einführabschnitts über mindestens ein Filmscharnier relativ zu dem Einfüllstutzenkörper verschwenkbar mit dem Einfüllstutzenkörper verbunden, so dass der Einfüllstutzenkörper mit den Segmenten des Einführabschnitts insbesondere als Formgussbauteil und besonders bevorzugt als Spritzgussbauteil aus Kunststoff ausgebildet sein kann. Dabei sollte eine durch das mindestens eine Filmscharnier definierte Schwenkachse vorzugsweise parallel zu der Längsachse des Einfüllstutzenkörpers verlaufen.

Um zu erreichen, dass das mindestens eine Segment des Einführabschnitts der Zapfpistolenführung möglichst einfach in den Einfüllstutzenkörper hineingeschwenkt werden kann, ist gemäß einer Weiterbildung der Erfindung vorgesehen, dass der Einfüllstutzenkörper zumindest bereichsweise eine geschlossene zylinderförmige Mantelfläche aufweist, wobei in dieser Mantelfläche ein Fensterbereich ausgebildet ist, wobei über diesen Fensterbereich das mindestens eine zweite Segment des Einführabschnitts der Zapfpistolenführung in den Einfüllstutzenkörper hinein verschwenkbar ist.

Dabei ist es nicht erforderlich, dass der Fensterbereich komplett oder sogar dichtend geschlossen ist - das Fenster stellt lediglich einen Raum zur Verfügung, in welchen das zweite Segment eingeschwenkt werden kann.

Im eingeschwenkten Zustand des zweiten Segments des Einführabschnitts kann dann mit Hilfe des zweiten Segments der in der zylinderförmigen Mantelfläche des Einfüllstutzenkörpers vorgesehene Fensterbereich verschlossen sein.

Damit das mindestens eine zweite Segment des Einführabschnitts mit dem Einfüllstutzenkörper fixiert werden kann, wenn das zweite Segment in den Einfüllstutzenkörper eingeschwenkt ist und somit in seiner zweiten Position vorliegt, ist gemäß Ausgestaltungen des erfindungsgemäßen Einfüllstutzens vorgesehen, dass das mindestens eine zweite Segment des Einführabschnitts mindestens ein Rast- oder Verriegelungselement aufweist, welches mit einem entsprechend hierzu komplementär ausgeführten Rast- oder Verriegelungselement am Einfüllstutzenkörper entsprechend zusammenwirkt, wenn das zweite Segment in den Einfüllstutzenkörper eingeschwenkt ist.

Gemäß einem Aspekt der Erfindung ist vorgesehen, dass sich der Einführabschnitt der Zapfpistolenführung zumindest bereichsweise in Richtung des Fahrzeugtanks verengt, beispielsweise konisch verengt, wobei ein Engquerschnitt des Einführabschnitts der Zapfpistolenführung größer ist als der Querschnitt einer Ottokraftstoffpistole oder einer AdBlue^{Ⓡ}- bzw. Harnstoffpistole und insbesondere kleiner ist als der Querschnitt einer Dieselzapfpistole.

Bei dieser Ausführungsform dient die Zapfpistolenführung als eine Fehlbetankungssperre, mit welcher wirksam verhindert werden kann, dass eine Dieselzapfpistole, dessen Querschnitt größer als der Querschnitt einer Ottokraftstoffpistole oder einer AdBlue^{Ⓡ}- bzw. Harnstoffpistole ist, den Engquerschnitt des sich zumindest bereichsweise in Richtung des Fahrzeugtanks verengenden Einführabschnittes der Zapfpistolenführung passiert.

Gemäß Ausführungsformen der Erfindung kann es sich bei dem Einführabschnitt der Zapfpistolenführung um einen sich zumindest bereichsweise konisch in Richtung des Fahrzeugtanks verengenden Einführabschnitt handeln. Allerdings ist die Erfindung nicht auf Einfüllstutzen mit Einführabschnitten beschränkt, welche eine konische Verengung aufweisen.

Gemäß Ausführungsformen der Erfindung kann der Einfüllstutzen ein erstes Verschlusselement insbesondere in Gestalt einer Verschlussklappe aufweisen, die dem Fahrzeugtank zugewandten Endbereich des Einfüllstutzenkörpers zugeordnet ist. Das erste Verschlusselement bzw. die erste Verschlussklappe ist vorzugsweise in einer Schließstellung vorgespannt, in welcher der Durchgang zum Fahrzeugtank geschlossen ist.

In diesem Zusammenhang ist es grundsätzlich denkbar, dass der die Zapfpistolenführung des Einfüllstutzens Fehlbetankungssperre mit dem Einführabschnitt als eine Fehlbetankungssperre dienen. Dies gilt insbesondere dann, wenn sich der Einführabschnitt in Richtung des Fahrzeugtanks verengt, beispielsweise konisch verengt, und der Engquerschnitt des Einführabschnitts kleiner ist als der Querschnitt einer Dieselzapfpistole und größer als der Querschnitt einer Ottokraftstoffpistole oder einer AdBlue^{Ⓡ}- bzw. Harnstoffpistole.

Gemäß Weiterbildungen dieses Aspekts ist vorgesehen, dass sich der Einführabschnitt der Zapfpistolenführung zumindest bereichsweise in Richtung des Fahrzeugtanks verengt, wobei ein Engquerschnitt des Einführabschnitts der Zapfpistolenführung größer ist als der Querschnitt einer Ottokraftstoffpistole oder einer Hilfsmittelpistole, z.B. AdBlue^{Ⓡ}- bzw. Harnstoffpistole oder Wasserzapfpistole, und kleiner ist als der Querschnitt einer Dieselzapfpistole oder größer ist als der Querschnitt einer Hilfsmittelpistole und kleiner ist als der Querschnitt einer Ottokraftstoffpistole.

Mit diesen Ausführungsformen wird verhindert, dass beispielsweise eine Dieselzapfpistole, dessen Querschnitt größer als der Querschnitt einer Ottokraftstoffpistole oder einer AdBlue^{Ⓡ}- bzw. Harnstoffpistole ist, den Engquerschnitt des sich zumindest bereichsweise in Richtung des Fahrzeugtanks verengenden Einführabschnittes der Zapfpistolenführung passiert und das an dem Fahrzeugtank zugewandten Endbereich des Einfüllstutzenkörpers angeordnete Verschlusselement (erstes Verschlusselement/Verschlussklappe) öffnen kann.

Um andererseits bei einem Einfüllstutzen für Dieselkraftstoff eine Fehlbetankung des zugeordneten Fahrzeugtanks mit beispielsweise Ottokraftstoff zu verhindern, ist gemäß einem Aspekt der vorliegenden Erfindung vorgesehen, dass die Fehlbetankungssperre, bevorzugt als Teilbereich in Form des Einführabschnitts, mit einem Betätigungselement versehen ist, wobei das Betätigungselement bevorzugt als Betätigungsring oder als Betätigungsringsegment aus federndem Material oder mit radialer Vorspannung ausgeführt ist, bevorzugt mit mindestens einem achsparallelen Spalt. Das Betätigungselement, bevorzugt der Betätigungsring, weist bevorzugt an dessen dem Fahrzeugtank zugewandten Ende, bevorzugt auf mindestens einer Seite des mindestens einen Spalts, einen Verrieglungsabschnitt auf, wobei der Verriegelungsabschnitt direkt oder indirekt an dem ersten Verschlusselement angreift und das erste Verschlusselement in seiner Schließstellung hält, wobei der Verriegelungsabschnitt das erste Verschlusselement freigibt, wenn durch eine Zapfpistole der Betätigungsring aufgeweitet wird.

In diesem Zusammenhang ist es beispielsweise denkbar, dass die Fehlbetankungssperre einen geschlitzten Betätigungsring aus federndem Material oder mit radialer Vorspannung mit mindestens einem achsparallelen Spalt aufweist, wobei der Betätigungsring an seinem dem Fahrzeugtank zugewandten Ende auf mindestens einer Seite des mindestens einen Spalts einen Verriegelungsabschnitt aufweist, welcher an dem ersten Verschlusselement angreift und das erste Verschlusselement in der Schließstellung hält, wobei das erste Verschlusselement aus einer geschlossenen in die geöffnete Stellung bewegt wird bzw. bewegbar ist, wenn durch eine Zapfpistole der Betätigungsring aufgeweitet wird und der Verriegelungsabschnitt das erste Verschlusselement freigibt.

Eine mögliche Realisierung eines solchen Betätigungsringes ist beispielsweise in der Druckschrift EP 1 712 398 B1 offenbart.

In diesem Zusammenhang ist gemäß Ausführungsformen der Erfindung vorgesehen, dass der Einfüllstutzen derart eingerichtet ist, dass eine Aufweitung des Betätigungselements durch einen Anschlag begrenzt ist, zumindest dann, wenn der Einfüllstuten in dem Einfüllrohr eingesetzt ist, bevorzugt derart, dass eine Aufweitung des Betätigungselements nur soweit möglich ist, wie es für den bevorzugt nächst größeren Zapfpistolenaußendurchmesser benötigt ist.

Hierdurch ist es möglich, bereits durch das Betätigungselement eine Fehlbetankung sowohl durch eine zu kleine, als auch eine zu große Zapfpistole zu verhindern - es sind keine anderen Querschnitte dafür nötig. Z.B. ist für den Fall eines Fahrzeugs mit Ottokraftstoffmotor durch das Betätigungselement ein Engquerschnitt definiert, der kleiner als der Durchmesser einer Ottokraftstoffpistole ist, jedoch größer als der Durchmesser einer Hilfsmittelpistole - daher lässt sich durch die Hilfsmittelpistole das erste Verschlusselement nicht entriegeln, sondern erst durch eine Ottokraftstoffpistole. Gleichzeitig ist das Betätigungselement durch einen Anschlag derart begrenzt, dass der Engquerschnitt nicht so groß werden kann, wie der Außendurchmesser einer Dieselkraftstoffpistole - so ist es nicht möglich, die Dieselkraftstoffpistole einzuführen. Der Anschlag kann am Einfüllstutzen selbst vorgesehen sein. Es kann jedoch auch das Einfüllrohr selbst als Anschlag vorgesehen sein.

Damit der Einfüllstutzen wahlweise mit und ohne dem Betätigungselement/Betätigungsring verwendet werden kann, ist in vorteilhafter Weise vorgesehen, dass das Betätigungselement bzw. der Betätigungsring schwenkbar mit dem Einfüllstutzenkörper verbunden ist und in den Einfüllstutzenkörper einschwenk- oder einklappbar ist.

In diesem Zusammenhang bietet es sich insbesondere auch an, das Betätigungselement bzw. den Betätigungsring zumindest bereichsweise und den Einfüllstutzenkörper zusammen mit dem Einführabschnitt der Fehlbetankungssperre als ein einstückiges Bauteil, insbesondere Formgussbauteil und bevorzugt Spritzgussbauteil aus Kunststoff, auszubilden.

Alternativ hierzu kann das Betätigungselement bzw. der Betätigungsring aus mindestens zwei Segmenten aufgebaut sein, wobei jedes Segment des Betätigungselements bzw. Betätigungsringes schwenkbar mit dem Einfüllstutzenkörper verbunden ist und in den Einfüllstutzenkörper einschwenk- oder einklappbar ist.

Gleichwohl bietet es sich auch hier an, die Segmente des Betätigungselements bzw. Betätigungsringes und den Einfüllstutzenkörper gemeinsam als ein einstückiges Formgussteil und insbesondere Kunststoff-Spritzgussteil auszubilden, und insbesondere als ein einstückiges Bauteil, insbesondere Formgussbauteil und bevorzugt Spritzgussbauteil aus Kunststoff, auszubilden.

Insbesondere kann das Betätigungselement bzw. der Betätigungsring bzw. können die Segmente des Betätigungsringes - wie auch zumindest das zweite Segment des Einführabschnitts der Fehlbetankungssperre - über mindestens ein oder mehrere Filmscharniere schwenkbar mit dem Einfüllstutzenkörper verbunden sein.

Gemäß einer bevorzugten Realisierung ist vorgesehen, dass das Betätigungselement über mindestens ein Filmscharnier schwenkbar mit dem Einfüllstutzenkörper verbunden ist. Bei dem mindestens einen Filmscharnier handelt es sich bevorzugt um dasselbe Filmscharnier mit welchem auch das jeweilige Segment des Einführabschnitts an den Einfüllstutzenkörper angebunden ist.

Alternativ hierzu sind die Segmente des Betätigungselements jeweils über mindestens ein Filmscharnier, bevorzugt dasselbe Filmscharnier mit welchem auch das jeweilige Segment des Einführabschnitts an den Einfüllstutzenkörper angebunden ist, schwenkbar mit dem Einfüllstutzenkörper verbunden.

Vor allem dann, wenn die durch das Betätigungselement bzw. den Betätigungsring ausgebildete Fehlbetankungssperre mit einem derartigen Betätigungselement bzw. Betätigungsring verwendet wird, welcher durch eine geeignete Zapfpistole aufgeweitet wird und der Verriegelungsabschnitt des Betätigungselements bzw. Betätigungsrings das erste Verschlusselement freigibt, kann der Engquerschnitt des in Richtung des Fahrzeugtanks beispielsweise konisch zulaufende Einführabschnitt der Zapfpistolenführung auch kleiner als der Querschnitt einer Dieselkraftpistole ausgeführt sein.

Insbesondere ist es in diesem Zusammenhang denkbar, dass sich der Einführabschnitt der Zapfpistolenführung zumindest bereichsweise in Richtung des Fahrzeugtanks verengt, wobei ein Engquerschnitt des Einführabschnitts der Zapfpistolenführung größer ist als der Querschnitt zumindest einer Ottokraftstoffpistole und kleiner ist als der Querschnitt einer Dieselkraftstoffpistole oder größer ist als der Querschnitt zumindest einer Hilfsmittelpistole, z.B. AdBlue^{Ⓡ}- bzw. Harnstoffpistole oder Wasserzapfpistole, und kleiner ist als der Querschnitt einer Ottokraftstoffpistole.

Insbesondere ist der erfindungsgemäße Einfüllstutzen für deckellose Kraftstoffeinfüllsysteme geeignet. Zu diesem Zweck weist gemäß Ausführungsformen des erfindungsgemäßen Einfüllstutzens der Einfüllstutzenkörper an seinem dem Fahrzeugtank gegenüberliegenden Endbereich ein zweites Verschlusselement insbesondere in Gestalt einer Verschlussklappe auf, welches in einen geschlossenen Zustand vorgespannt ist und durch Einführen einer Zapfpistole in den dem Fahrzeugtank gegenüberliegenden Endbereich des Einfüllstutzenkörpers in die geöffnete Stellung bewegt wird.

Allerdings ist die Erfindung nicht auf Einfüllstutzen für deckellose Kraftstoffeinfüllsysteme beschränkt. Vielmehr eignet sich der erfindungsgemäße Einfüllstutzen in gleicher Weise und mit den gleichen Vorteilen insbesondere bei der Herstellung und Montage für konventionelle Kraftstoffeinfüllsysteme mit Deckel.

Die Integration einer ersten und/oder zweiten Verschlussklappe (Verschlusselemente) in dem Einfüllstutzen kann abgedichtet oder nicht-abgedichtet ausgebildet sein, wodurch diese in der Verschlussstellung ein Überströmen auch geringer Mengen von Betriebsstoff und gegebenenfalls Gasen weitestgehend verhindert. Dazu kann die entsprechende Verschlussklappe und/oder der Einfüllstutzenkörper im Inneren ein Dichtelement umfassen, durch welches ein zwischen dem Einfüllstutzenkörper und der Verschlussklappe in deren Verschlussstellung ausgebildeter Spalt abgedichtet wird.

Um einen Austritt von Betriebsstoff und gegebenenfalls Gasen durch einen zwischen der Außenfläche des Einfüllstutzens und dem zu dem Fahrzeugtank führenden Einfüllrohr zu vermeiden, kann grundsätzlich vorgesehen sein, dass mindestens ein bezüglich der Längsausrichtung des Einfüllstutzens außerhalb des Einfüllstutzenkörpers angeordnetes Dichtelement vorgesehen ist.

Eine solche Abdichtung zwischen dem Außenbereich des Einfüllstutzenkörpers und dem zu dem Fahrzeugtank führenden Einfüllrohr kann auf konstruktiv einfache Weise dadurch erreicht werden, dass das Dichtelement als Dichtring (z.B. O-Ring oder Profildichtring) ausgebildet ist, der weiterhin bevorzugt zur Lagesicherung in einer Umfangsnut an der Außenwand des Einfüllstutzenkörpers angeordnet ist. Eine Integration des Dichtelements kann aber auch mittels eines ZweiKomponenten-Herstellungsverfahrens (insbesondere Zwei-Komponenten-Spritzguss) realisiert werden.

Vorzugsweise sind mindestens zwei Dichtelemente vorgesehen, von denen jeweils mindestens eines auf jeder Seite (bezogen auf die Längsausrichtung des Einfüllstutzens) außerhalb des Mantels des Einfüllstutzenkörpers angeordnet ist.

In Ausgestaltungen der Erfindung ist vorgesehen, dass der Einführabschnitt insbesondere als ein zumindest bereichsweise konische in Richtung des Fahrzeugtanks zulaufender Einführabschnitt ausgeführt ist, wobei der Einführabschnitt von radialen in Umfangsrichtung beabstandeten Rippen oder Lamellen gebildet sein kann. Die Rippen oder Lamellen verhindern ein Aufweiten des Betätigungsrings aufgrund z.B. von Spritzwasser unter Druck.

Nachfolgend wird die Erfindung anhand von Zeichnungen näher erläutert.

Es zeigen:
- FIG. 1: schematisch und in einer isometrischen Ansicht eine exemplarische Ausführungsform des erfindungsgemäßen Einfüllstutzens in einem Zustand, in welchem das zweite Segment des Einführabschnitts außerhalb des Einfüllstutzenkörpers vorliegt;
- FIG. 2: schematisch und in einer isometrischen Ansicht den Einfüllstutzen gemäß FIG. 1 in einem Zustand, in welchem das zweite Segment des Einführabschnitts in den Einfüllstutzenkörper eingeschwenkt ist;
- FIG. 3: schematisch und in einer Seitenansicht die exemplarische Ausführungsform des erfindungsgemäßen Einfüllstutzens in dem in FIG. 1 gezeigten Zustand;
- FIG. 4: schematisch und in einer Schnittansicht den Einfüllstutzen gemäß FIG. 3 entlang der Linie A-A in FIG. 3;
- FIG. 5: schematisch und in einer Seitenansicht die exemplarische Ausführungsform des erfindungsgemäßen Einfüllstutzens in dem in FIG. 2 gezeigten Zustand;
- FIG. 6: schematisch eine Schnittansicht des Einfüllstutzens gemäß FIG. 5 entlang der Linie B-B;
- FIG. 7: schematisch und in einer isometrischen Ansicht eine weitere exemplarische Ausführungsform des erfindungsgemäßen Einfüllstutzens in einem Zustand, in welchem das zweite Segment des Einführabschnitts außerhalb des Einfüllstutzenkörpers vorliegt;
- FIG. 8: schematisch den Einfüllstutzen gemäß FIG. 7 in einer Draufsicht von oben, d.h. in Einführrichtung einer Zapfpistole;
- FIG. 9: schematisch und in einer isometrischen Ansicht den Einfüllstutzen gemäß FIG. 7 in einem Zustand, in welchem das zweite Segment des Einführabschnitts in den Einfüllstutzenkörper eingeschwenkt ist;
- FIG. 10: schematisch den Einfüllstutzen gemäß FIG. 9 in einer Draufsicht von oben, d.h. in Einführrichtung einer Zapfpistole;
- FIG. 11: schematisch und in einer isometrischen Ansicht eine weitere exemplarische Ausführungsform des erfindungsgemäßen Einfüllstutzens in einem Zustand, in welchem das zweite Segment des Einführabschnitts außerhalb des Einfüllstutzenkörpers vorliegt;
- FIG. 12: schematisch den Einfüllstutzen gemäß FIG. 11 in einer Draufsicht von oben, d.h. in Einführrichtung einer Zapfpistole;
- FIG. 13: schematisch und in einer isometrischen Ansicht den Einfüllstutzen gemäß FIG. 11 in einem Zustand, in welchem das zweite Segment des Einführabschnitts in den Einfüllstutzenkörper eingeschwenkt ist; und
- FIG. 14: schematisch den Einfüllstutzen gemäß FIG. 13 in einer Draufsicht von oben, d.h. in Einführrichtung einer Zapfpistole.

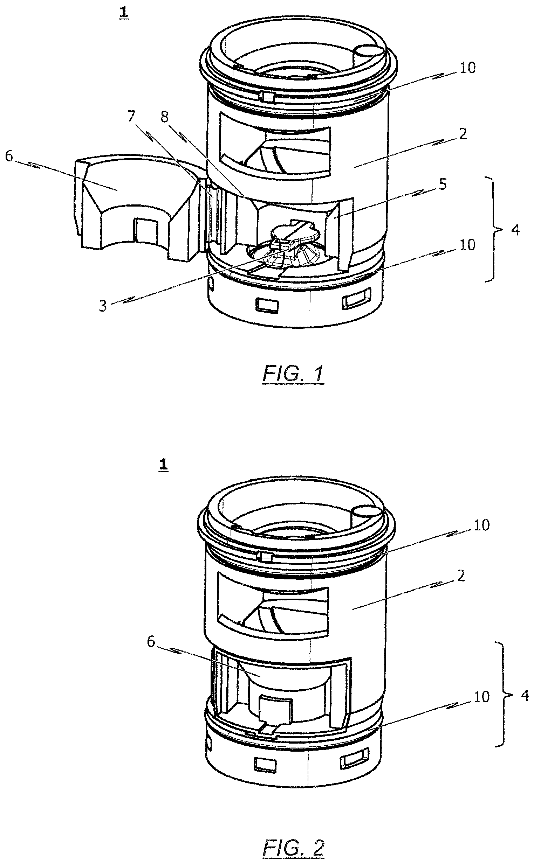

In den beiliegenden Zeichnungen ist eine exemplarische Ausführungsform eines Einfüllstutzens 1 in zwei verschiedenen Zuständen gezeigt, nämlich in einem ersten Zustand, in welchem ein Segment (das zweite Segment 6) des Einführabschnitts 4 der Zapfpistolenführung noch nicht in den Einfüllstutzenkörper eingeschwenkt ist (vgl. FIG. 1, 3 und 4), und in einem Zustand, in welchem das Segment des Einführabschnitts 4 (zweites Segment 6) in den Einfüllstutzenkörper 2 eingeschwenkt ist (vgl. FIG. 2, 5 und 6).

Der Einfüllstutzen 1 dient allgemein zum Einfüllen eines Betriebsstoffs (wie beispielsweise eines Kraftstoffs oder AdBlue^{®} bzw. Harnstoff) in einen in den Zeichnungen nicht dargestellten Fahrzeugtank mittels einer ebenfalls in den Zeichnungen nicht dargestellten Zapfpistole.

Der Einfüllstutzen 1 weist einen Einfüllstutzenkörper 2 auf, welcher in ein zu dem Fahrzeugtank führendes Einfüllrohr (nicht dargestellt) aufnehmbar ist. Das Einfüllrohr führt zu dem bereits erwähnten Fahrzeugtank und kann an seinem freien Endbereich beispielsweise einen radial nach innen zeigenden Wulst aufweisen, der mit entsprechenden Federzungen an der Außenseite des vorzugsweise aus Kunststoff bestehenden Einfüllstutzenkörpers 2 zusammenwirkt, um den Einfüllstutzenkörper 2 axial festzulegen.

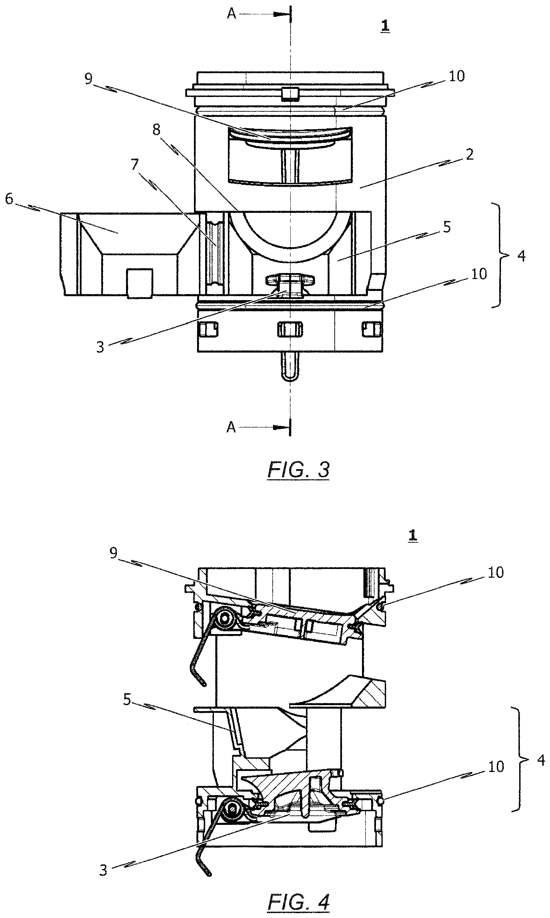

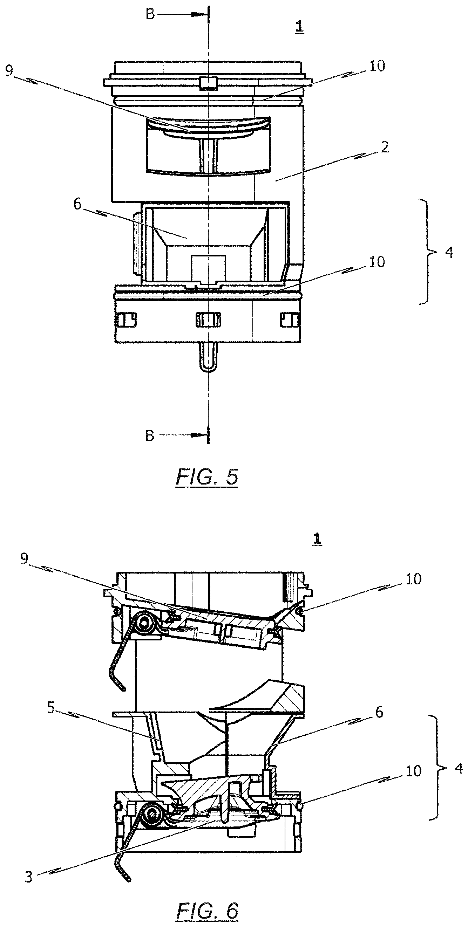

Wie es insbesondere der Darstellung in FIG. 1 und den Schnittansichten in FIG. 4 bzw. FIG. 6 entnommen werden kann, weist der Einfüllstutzen 1 ein erstes Verschlusselement 3 in Gestalt einer Verschlussklappe auf, die dem Fahrzeugtank zugewandten Endbereich des Einfüllstutzenkörpers 2 zugeordnet ist.

Dieses schwenkbar an dem Einfüllstutzenkörper 2 gelagerte (erstes) Verschlusselement 3 ist mit Hilfe einer Feder in seine Grundstellung vorgespannt, in welcher das erste Verschlusselement in seiner Schließstellung vorliegt und den Durchgang zum Fahrzeugtank schließt. Grundsätzlich ist das erste Verschlusselement 3 ausgebildet, dass dieses aus der vorgespannten Grundstellung durch eine Zapfpistole in eine den Durchgang zum Fahrzeugtank freigebende Offenstellung gedrückt werden kann.

Die exemplarische Ausführungsform des erfindungsgemäßen Einfüllstutzens 1 ist ferner mit einer Zapfpistolenführung versehen, wobei die Zapfpistolenführung einen Einführabschnitt 4 aufweist, der sich in Richtung des Fahrzeugtanks konisch verengt, wenn die einzelnen Segmente 5, 6 des Einführabschnitts 4 im Einfüllstutzenkörper 2 angeordnet sind (vgl. FIG. 2, FIG. 5 und FIG. 6). In diesem Zustand ist der Engquerschnitt des Einführabschnitts 4 so gewählt, dass dieser kleiner ist als der Querschnitt zumindest einer Dieselzapfpistole.

Hierbei ist zu berücksichtigen, dass es üblich ist, Düsen bzw. Zapfpistolen zur Abgabe von Dieselkraftstoff mit einem größeren Durchmesser zu versehen als die Düsen bzw. Zapfpistolen zur Abgabe von Ottokraftstoff oder AdBlue^{®} bzw. Harnstoff. Folglich kann eine Person nicht unabsichtlich Dieselkraftstoff von einer Dieselzapfpistole in einen Fahrzeugtank eines Fahrzeuges abgeben, welches mit Ottokraftstoff betrieben wird, und zwar am Einlassende des Automobilkraftstoffsystems eine kleinere Öffnung hat als der Durchmesser einer Dieselkraftstoff-Abgabedüse.

Mittels eines weiteren Beispiels hat eine Harnstoff-Abgabedüse im allgemeinen einen Durchmesser von 19 mm und eine Benzinabgabedüse hat im allgemeinen einen Durchmesser von 21 mm. Fahrzeugkraftstoffsysteme, welche solche Kraftstoffe aufnehmen sollen, sind mit Kraftstoffsystem-Einlassöffnungen versehen, welche nur minimal größer sind als der Abgabedüsendurchmesser des vorgesehenen Kraftstoffs. Durchmesser für Dieselkraftstoff-Betankungssystem-Abgabedüsen, welche für Personenkraftwagen und leichte Lastwagen vorgesehen sind, liegen im Allgemeinen zwischen 23,6 mm und 25,5 mm, während Dieselkraftstoff-Abgabedüsen mit hoher Durchflussrate, welche für Schwerlastwagen vorgesehen sind, mit Durchmessern von 28,5 mm bis 38 mm versehen sind, um eine schnellere Abgabe von größeren Kraftstoffvolumen zu ermöglichen. Die Einlassöffnungen von Fahrzeugkraftstoffsysteme, welche mit Dieselkraftstoff betankt werden sollen, sind wiederum mit Öffnungsdurchmessern versehen, welche nur minimal größer sind als die Abgabedüsendurchmesser, aus denen sie betankt werden sollen.

Folglich ist es anzunehmen, dass die Düse für Dieselkraftstoff-Abgabesysteme im Allgemeinen nicht in die Betankungseinlassöffnungen von Benzin- oder Harnstoffkraftstoffsystemen passt, und es ist deshalb unwahrscheinlich, dass ein Kraftstoffsystem, welches Benzin oder Harnstoff erfordert, unabsichtlich mit Dieselkraftstoff betankt wird. Jedoch aufgrund des größeren Durchmessers an den Betankungseinlassöffnungen von Dieselkraftstoffsystemen, kann ein Fahrzeug, welches Dieselkraftstoff benötigt, unabsichtlich aus einer Betankungssystem betankt werden, welches eine Harnstoffabgabedüse oder eine Benzinabgabedüse hat. Das Betanken mit dem falschen Kraftstoff kann einen Schaden an Kraftstoffsystemen und Motoren verursachen und muss deshalb vermieden werden.

Der erfindungsgemäße Einfüllstutzen 1, wie er anhand einer exemplarischen Ausführungsform in den Zeichnungen dargestellt ist, zeichnet sich insbesondere dadurch aus, dass der Einfüllstutzenkörper 2 und der Einführabschnitt 4 der Zapfpistolenführung als ein gemeinsames, einstückiges Kunststoff-Formgussteil und insbesondere Kunststoff-Spritzgussteil ausgebildet sind.

Hierzu ist bei der exemplarischen Ausführungsform vorgesehen, den Einführabschnitt 4 der Zapfpistolenführung in mehrere (hier genau zwei) Segmente 5, 6 zu unterteilen, wobei ein erstes Segment 5 integral im Inneren des Einfüllstutzenkörpers 2 ausgebildet und fest mit dem Einfüllstutzenkörper 2 verbunden ist, und wobei das verbleibende, zweite Segment 6 mit dem Einfüllstutzenkörper 2 gelenkig verbunden ist.

Eine Zusammenschau insbesondere der FIGS. 1 und 2 ergibt, dass bei der exemplarischen Ausführungsform des erfindungsgemäßen Einfüllstutzens 1 das zweite Segment 6 des Einführabschnitts 4 der Zapfpistolenführung relativ zu dem Einfüllstutzenkörper 2 zwischen einer ersten Position, in welcher das zweite Segment 6 außerhalb des Einfüllstutzenkörpers 2 vorliegt (vgl. FIG. 1), und einer zweiten Position verschwenkbar ist, in welcher das zweite Segment 6 innerhalb des Einfüllstutzenkörpers 2 vorliegt und zusammen mit dem ersten Segment 5 die konische Verengung in Richtung des Fahrzeugtanks bildet (vgl. FIG. 2).

Im Einzelnen kommt zur verschwenkbaren Anlenkung des zweiten Segments 6 ein Filmscharnier 7 zum Einsatz, über welches das zweite Segment 6 relativ zu dem Einfüllstutzenkörper 2 verschwenkbar mit dem Einfüllstutzenkörper 2 verbunden ist. Dabei verläuft eine durch das Filmscharnier 7 definierte Schwenkachse parallel zu der Längsachse des Einfüllstutzenkörpers 2.

Des Weiteren ist insbesondere den Darstellungen in FIG. 1 und FIG. 3 zu entnehmen, dass der Einfüllstutzenkörper 2 zumindest bereichsweise eine zylinderförmige Mantelfläche mit einem Fensterbereich 8 aufweist, wobei der Fensterbereich 8 geschlossen ist, wenn das zweite Segment 6 in den Einfüllstutzenkörper 2 eingeschwenkt ist und in seiner zweiten Position vorliegt.

Um das zweite Segment 6 des Einführabschnitts 4 an dem Einfüllstutzenkörper 2 zu fixieren, wenn das zweite Segment 6 in den Einfüllstutzenkörper 2 eingeschwenkt ist und in seiner zweiten Position vorliegt, kann das zweite Segment 6 entsprechend mindestens ein Rast- oder Verriegelungselement aufweisen, welches mit einem entsprechend komplementär hierzu ausgebildeten Rast- oder Verriegelungselement am Einfüllstutzenkörper 2 zusammenwirkt.

Die bei dem in den Zeichnungen gezeigten Einfüllstutzen 1 zum Einsatz kommende Zapfpistolenführung ist bei dieser exemplarischen Ausführungsform ausgebildet, um zu verhindern, dass eine Dieselkraftstoffpistole, welche in den Einfüllstutzen 1 eingesetzt ist, das erste Verschlusselement 3 erreicht und somit aufdrücken kann. Zu diesem Zweck ist bei der in den Zeichnungen gezeigten exemplarischen Ausführungsform des erfindungsgemäßen Einfüllstutzens 1 vorgesehen, dass der Engquerschnitt des Einführabschnitts 4 der Zapfpistolenführung kleiner ist als der Querschnitt einer Dieselkraftstoffpistole und mindestens gleich groß ist wie der Querschnitt einer Ottokraftstoffpistole oder einer AdBlue^{Ⓡ}- bzw. Harnstoffpistole.

Um in umgekehrter Weise einen Einfüllstutzen 1 zum Einfüllen von Dieselkraftstoff in einen Fahrzeugtank mit einer entsprechenden Fehlbetankungssperre zu versehen, die verhindert, dass mittels einer Ottokraftstoffpistole oder AdBlue^{Ⓡ}- bzw. Harnstoffpistole einen Betriebsstoff in den Fahrzeugtank einfüllt, kann gemäß einer in den Zeichnungen nicht gezeigten Ausführungsform des erfindungsgemäßen Einfüllstutzens 1 vorgesehen sein, dass die Fehlbetankungssperre beispielsweise einen geschlitzten Betätigungsring aus federndem Material oder mit radialer Vorspannung mit einem achsparallelen Spalt aufweist, wobei der Betätigungsring an seinem dem Fahrzeugtank zugewandten Ende auf mindestens einer Seite des Spalts einen Verriegelungsabschnitt aufweist, wobei der Verriegelungsabschnitt an dem ersten Verschlusselement angreift und das erste Verschlusselement 3 in der Schließstellung hält, wobei das erste Verschlusselement 3 aus einer geschlossenen in die geöffnete Stellung bewegbar ist, wenn durch eine geeignete Zapfpistole der Betätigungsring aufgeweitet wird und der Verriegelungsabschnitt das erste Verschlusselement 3 freigibt.

Um einen Austritt von Betriebsstoff und gegebenenfalls Gasen durch einen zwischen der Außenfläche des Einfüllstutzens 1 und dem zu dem Fahrzeugtank führenden Einfüllrohr zu vermeiden, sind bei der in den Zeichnungen gezeigten Ausführungsform des Einfüllstutzens 1 insgesamt zwei bezüglich der Längsausrichtung des Einfüllstutzens 1 außerhalb des Einfüllstutzenkörpers 2 angeordnete Dichtelemente 10 vorgesehen.

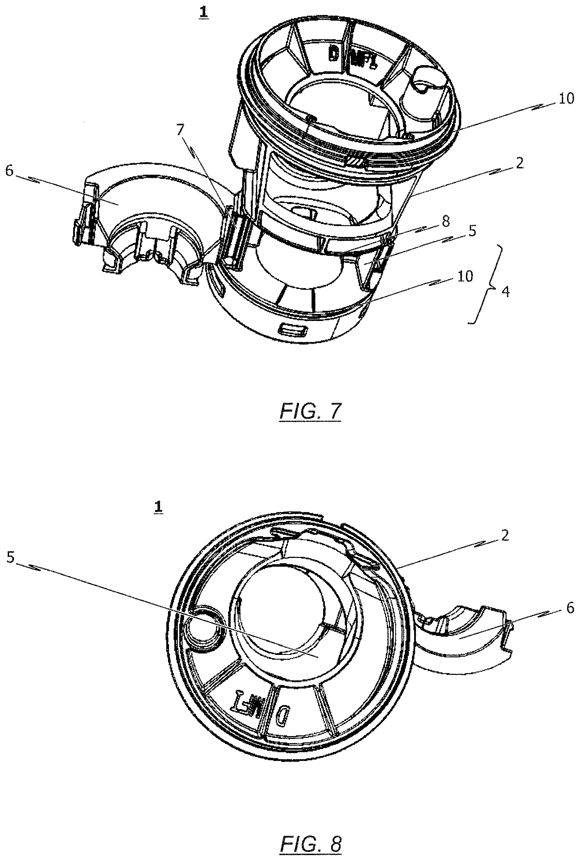

Nachfolgend wird unter Bezugnahme auf die Darstellungen in FIG. 7 bis FIG. 10 ein zweites Ausführungsbeispiel des erfindungsgemäßen Einfüllstutzens 1 beschrieben. Im Einzelnen zeigt FIG. 7 schematisch und in einer isometrischen Ansicht den Einfüllstutzen 1 dieser weiteren Ausführungsform, und zwar in einem Zustand, in welchem das zweite Segment 6 des Einführabschnitts 4 außerhalb des Einfüllstutzenkörpers 2 vorliegt. FIG. 8 zeigt den Einfüllstutzen 1 gemäß FIG. 7 in einer Draufsicht von oben, d.h. in Einführrichtung einer Zapfpistole.

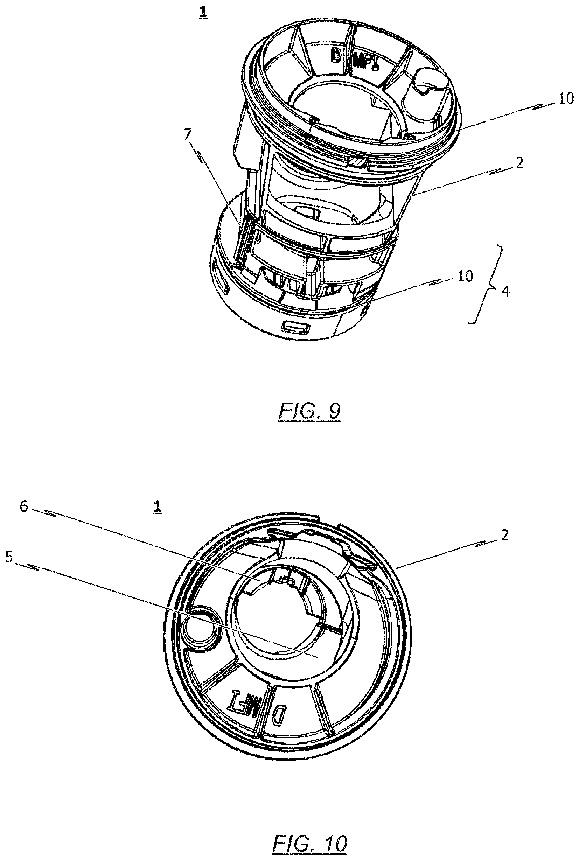

FIG. 9 zeigt schematisch und in einer isometrischen Ansicht den Einfüllstutzen 1 gemäß FIG. 7, jedoch diesmal in einem Zustand, in welchem das zweite Segment 6 des Einführabschnitts 4 in den Einfüllstutzenkörper 2 eingeschwenkt ist. FIG. 10 zeigt den Einfüllstutzen 1 gemäß FIG. 9 in einer Draufsicht von oben.

Wie auch der Einfüllstutzen 1 gemäß der in FIG. 1 bis FIG. 6 gezeigten Ausführungsform dient der Einfüllstutzen 1 gemäß der weiteren Ausführungsform allgemein zum Einfüllen eines Betriebsstoffs in einen in den Zeichnungen nicht dargestellten Fahrzeugtank mittels einer ebenfalls nicht dargestellten Zapfpistole. Der Einfüllstutzen 1 weist einen Einfüllstutzenkörper 2 auf, welcher in ein zu dem Fahrzeugtank führendes Einführrohr (nicht dargestellt) aufnehmbar ist.

Obgleich in FIG. 7 bis FIG. 10 nicht dargestellt, kann der Einfüllstutzen 1 ein schwenkbar an dem Einfüllstutzenkörper 2 gelagertes (erstes) Verschlusselement aufweisen, wie das erste Verschlusselement 3 der Ausführungsform gemäß FIG. 1.

Ferner ist bei der weiteren Ausführungsform des erfindungsgemäßen Einfüllstutzens 1 gemäß FIG. 7 bis FIG. 10 kein zweites Verschlusselement insbesondere in Gestalt einer Verschlussklappe dargestellt, obgleich ein derartiges zweites Verschlusselement selbstverständlich entsprechend vorgesehen sein kann.

Die Ausführungsform des erfindungsgemäßen Einfüllstutzens 1 gemäß FIG. 7 bis FIG. 10 unterscheidet sich von dem Einfüllstutzen 1 gemäß FIG. 1 bis FIG. 6 insbesondere durch die Ausgestaltung und Anbindung des zweiten Segments 6 des Einführabschnitts 4 an dem Einfüllstutzenkörper 2.

Der Einfüllstutzen 1 gemäß der in FIG. 7 bis FIG. 10 gezeigten Ausführungsform ist ein MFI-Einfüllstutzen 1 (MFI = Miss-Fuel-Inhibitor) zum Einfüllen von Ottokraftstoff in einen Fahrzeugtank mittels einer Zapfpistole. Der MFI-Einfüllstutzen 1 verhindert, dass Hilfsmittel in den Fahrzeugtank eingefüllt werden können, wie beispielsweise Wasser oder Harnstoff.

Bei der in FIG. 7 bis FIG. 10 gezeigten Ausführungsform ist insbesondere vorgesehen, dass das über das Filmscharnier 7 einklappbare zweite Segment 6 des Einführabschnitts 4 selbst als Betätigungselement zum Betätigen eines in FIG. 7 bis FIG. 10 nicht dargestellten Verschlusselements dient.

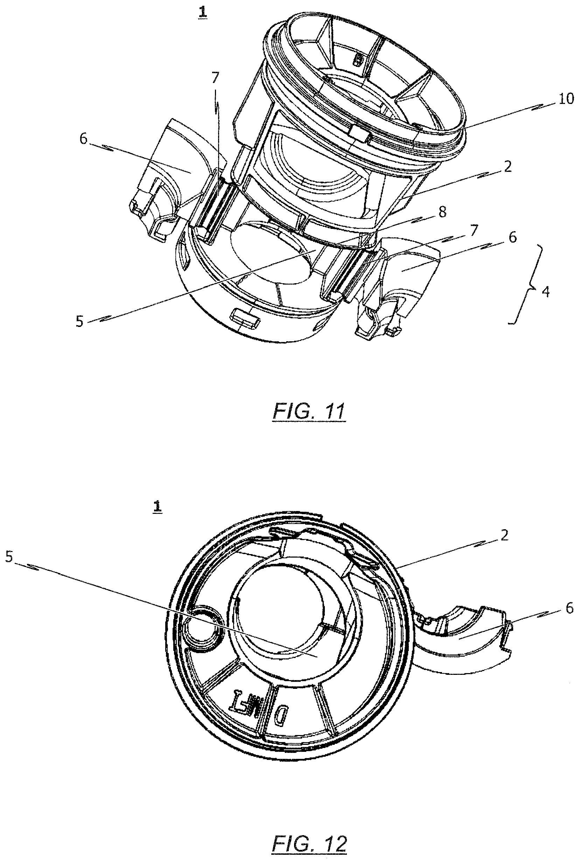

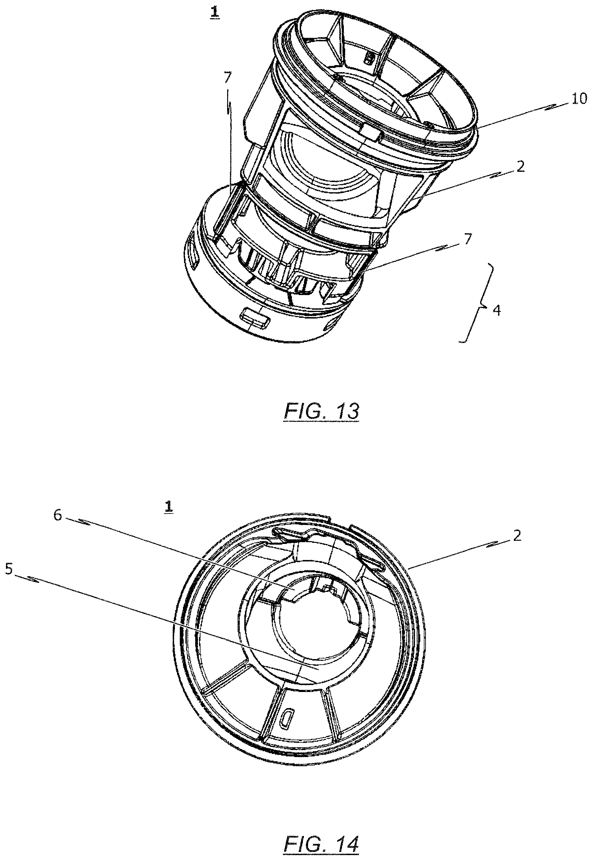

FIG. 11 bis FIG. 14 zeigen eine Variante der in FIG. 7 bis FIG. 10 gezeigten Ausführungsform, bei welcher insgesamt zwei zweite Segmente 6 vorgesehen sind, die jeweils über ein Filmscharnier 7 mit dem Einfüllstutzenkörper 2 des Einfüllstutzens 1 verbunden sind.

Wie auch bei der in FIG. 7 bis FIG. 10 gezeigten Ausführungsform ist bei der Ausführungsform gemäß FIG. 11 bis FIG. 14 vorgesehen, dass die über die Filmscharniere 7 einklappbaren Segmente 6 selbst zusammen ein Betätigungselement zum bedarfsweisen Betätigen eines in FIG. 11 bis FIG. 14 nicht gezeigten (zweiten) Verschlusselements ausbilden.

Die Filmscharniere 7, über welche die zweiten Segmente e mit dem Einfüllstutzen 1 verbunden sind, können eine Spreizbewegung der Segmente 6 im eingeklappten Zustand realisieren, und zwar über ihre vorhandene Beweglichkeit, um so bedarfsweise das (zweite) Verschlusselement zu betätigen.

Demnach ist ersichtlich, dass die Fehlbetankungsfunktion bzw. Fehlbetankungseinheit auch den Einführabschnitt 4 der Zapfpistolenführung bilden kann. Mit anderen Worten, es muss nicht immer ein Einführabschnitt 4 und separat davon ein Betätigungsring oder Betätigungselement für das zweite Verschlusselement vorgesehen sein.

Darüber hinaus muss das Betätigungselement nicht immer komplett oder teilweise ringförmig ausgebildet sein. Insbesondere wird das zweite Verschlusselement (Verschlussklappe) gemäß Ausführungsvarianten erst durch Drücken der in den Einfüllstutzen 1 eingeführten Zapfpistole auf das zweite Verschlusselement geöffnet und nicht zwangsläufig automatisch durch das Spreizen des Betätigungselements.

Wie in den Zeichnungen dargestellt, eignet sich die exemplarische Ausführungsform des erfindungsgemäßen Einfüllstutzens 1 1 insbesondere für ein deckelloses Kraftstoffeinfüllsystem. Hierzu weist der Einfüllstutzenkörper 2 an seinem dem Fahrzeugtank gegenüberliegenden Endbereich ein zweites Verschlusselement 9 insbesondere in Gestalt einer Verschlussklappe auf, welches in einen geschlossenen Zustand vorgespannt ist, und durch Einführen einer Zapfpistole in den, dem Fahrzeugtank gegenüberliegenden Endbereich, des Einfüllstutzenkörpers 2 2 in die geöffnete Stellung bewegt wird.

Die Erfindung ist nicht auf die in den Zeichnungen gezeigte exemplarische Ausführungsform beschränkt, sondern wird durch den Schutzumfang der beigefügten Ansprüche beschränkt.

### Bezugszeichenliste

- 1: Einfüllstutzen
- 2: Einfüllstutzenkörper
- 3: erstes Verschlusselement
- 4: Einführabschnitt der Zapfpistolenführung
- 5: erstes Segment des Einführabschnitts
- 6: zweites Segment des Einführabschnitts
- 7: Filmscharnier
- 8: Fensterbereich
- 9: zweites Verschlusselement
- 10: Dichtelement

## Patentansprüche

1. Einfüllstutzen (1) zum Einfüllen eines Betriebsstoffes, wie Kraftstoff oder AdBlue^{®} bzw. Harnstoff, oder eines Zusatzstoffes, wie Wasser, in einen Fahrzeugtank mittels einer Zapfpistole, wobei der Einfüllstutzen (1) folgendes aufweist:
- einen Einfüllstutzenkörper (2), welcher in ein zu dem Fahrzeugtank führendes Einfüllrohr aufnehmbar ist; und
- eine Zapfpistolenführung mit einem Einführabschnitt (4) zum Führen einer in den Einfüllstutzenkörper (2) aufgenommenen oder aufzunehmenden Zapfpistole in Richtung des Fahrzeugtanks,
wobei der Einfüllstutzenkörper (2) und der Einführabschnitt (4) der Zapfpistolenführung gemeinsam als ein einstückiges Formgussteil, insbesondere Kunststoff-Spritzgussteil, ausgebildet sind;
**dadurch gekennzeichnet dass**:
der Einführabschnitt (4) der Zapfpistolenführung ein mit dem Einfüllstutzenkörper (2) integral ausgebildetes und im Inneren des Einfüllstutzenkörpers (2) fest mit dem Einfüllstutzenkörper (2) verbundenes erstes Segment (5) und mindestens ein mit dem Einfüllstutzenkörper (2) gelenkig verbundenes zweites Segment (6) aufweist, wobei das zweite Segment (6) relativ zu dem Einfüllstutzenkörper (2) zwischen einer ersten Position, in welcher das zweite Segment (6) außerhalb des Einfüllstutzenkörpers (2) vorliegt, und einer zweiten Position, in welcher das zweite Segment (6) innerhalb des Einfüllstutzenkörpers (2) vorliegt und zusammen mit dem ersten Segment (5) die Führung einer in den Einfüllstutzenkörper (2) aufgenommenen Zapfpistole in Richtung des Fahrzeugtanks bildet, verschwenkbar ist.

2. Einfüllstutzen (1) nach Anspruch 1,
wobei das mindestens eine zweite Segment (6) über mindestens ein Filmscharnier (7) relativ zu dem Einfüllstutzenkörper (2) verschwenkbar mit dem Einfüllstutzenkörper (2) verbunden ist, wobei eine durch das Filmscharnier (7) definierte Schwenkachse vorzugsweise parallel zu der Längsachse des Einfüllstutzenkörpers (2) verläuft.

3. Einfüllstutzen (1) nach Anspruch 1 oder 2,
wobei der Einfüllstutzenkörper (2) zumindest bereichsweise eine zylinderförmige Mantelfläche mit einem Fensterbereich (8) aufweist, wobei der Fensterbereich (8) geschlossen ist, wenn das mindestens eine zweite Segment (6) in den Einfüllstutzenkörper (2) eingeschwenkt ist und in seiner zweiten Position vorliegt.

4. Einfüllstutzen (1) nach einem der Ansprüche 1 bis 3,
wobei das mindestens eine zweite Segment (6) des Einführabschnitts (4) mindestens ein Rast- oder Verriegelungselement aufweist zum Fixieren des zweiten Segments (6) an dem Einfüllstutzenkörper (2), wenn das zweite Segment (6) in den Einfüllstutzenkörper (2) eingeschwenkt ist und in seiner zweiten Position vorliegt.

5. Einfüllstutzen (1) nach einem der Ansprüche 1 bis 4, wobei der Einfüllstutzen (1) ferner folgendes aufweist:
- ein erstes Verschlusselement (3), insbesondere in Gestalt einer Verschlussklappe, welches dem Fahrzeugtank zugewandten Endbereich des Einfüllstutzenkörpers (2) zugeordnet ist, und welches in seiner Schließstellung den Durchgang zum Fahrzeugtank schließt,
wobei bevorzugt das erste Verschlusselement (3) in seine Schließstellung vorgespannt ist.

6. Einfüllstutzen (1) nach einem der Ansprüche 1 bis 5,
wobei sich der Einführabschnitt (4) der Zapfpistolenführung zumindest bereichsweise in Richtung des Fahrzeugtanks verengt, wobei ein Engquerschnitt des Einführabschnitts (4) der Zapfpistolenführung größer ist als der Querschnitt einer Ottokraftstoffpistole oder einer Hilfsmittelpistole, z.B. AdBlue^{Ⓡ}- bzw. Harnstoffpistole oder Wasserzapfpistole, und kleiner ist als der Querschnitt einer Dieselzapfpistole oder größer ist als der Querschnitt einer Hilfsmittelpistole und kleiner ist als der Querschnitt einer Ottokraftstoffpistole.

7. Einfüllstutzen (1) nach einem der Ansprüche 1 bis 6,
wobei der Einfüllstutzen (1) ferner folgendes aufweist:
- eine Fehlbetankungssperre, bevorzugt als Teilbereich in Form des Einführabschnitts, mit einem Betätigungselement, bevorzugt einem Betätigungsring oder Betätigungsringsegment aus federndem Material oder mit radialer Vorspannung, bevorzugt mit mindestens einem achsparallelen Spalt,
wobei das Betätigungselement, bevorzugt der Betätigungsring, bevorzugt an dessen dem Fahrzeugtank zugewandten Ende, bevorzugt auf mindestens einer Seite des mindestens einen Spalts, einen Verrieglungsabschnitt aufweist, wobei der Verriegelungsabschnitt direkt oder indirekt an dem ersten Verschlusselement (3) angreift und das erste Verschlusselement (3) in seiner Schließstellung hält, wobei der Verriegelungsabschnitt das erste Verschlusselement (3) freigibt, wenn durch eine Zapfpistole das Betätigungselement, bevorzugt der Betätigungsring, aufgeweitet wird.

8. Einfüllstutzen (1) nach Anspruch 7,
wobei der Einfüllstutzen (1) derart eingerichtet ist, dass eine Aufweitung des Betätigungselements durch einen Anschlag begrenzt ist, zumindest dann, wenn der Einfüllstuten in dem Einfüllrohr eingesetzt ist, bevorzugt derart, dass eine Aufweitung des Betätigungselements nur soweit möglich ist, wie es für den bevorzugt nächst größeren Zapfpistolenaußendurchmesser benötigt ist.

9. Einfüllstutzen (1) nach Anspruch 7 oder 8,
wobei das Betätigungselement schwenkbar mit dem Einfüllstutzenkörper (2) verbunden ist und in den Einfüllstutzenkörper (2) einschwenk- oder einklappbar ist; oder
wobei das Betätigungselement aus mindestens zwei Segmenten, bevorzugt zwei Ringsegmenten aufgebaut ist, wobei jedes Segment des Betätigungselements schwenkbar mit dem Einfüllstutzenkörper (2) verbunden ist und in den Einfüllstutzenkörper (2) einschwenk- oder einklappbar ist.

10. Einfüllstutzen (1) nach einem der Ansprüche 7 bis 9,
wobei das Betätigungselement oder die Segmente des Betätigungselements und der Einfüllstutzenkörper (2) gemeinsam als ein einstückiges Formgussteil und insbesondere Kunststoff-Spritzgussteil ausgebildet sind.

11. Einfüllstutzen (1) nach einem der Ansprüche 7 bis 10,
wobei das Betätigungselement über mindestens ein Filmscharnier, bevorzugt dasselbe Filmscharnier mit welchem auch das jeweilige Segment des Einführabschnitts an den Einfüllstutzenkörper (2) gemäß Anspruch 3 angebunden ist, schwenkbar mit dem Einfüllstutzenkörper (2) verbunden ist; oder
wobei die Segmente des Betätigungselements jeweils über mindestens ein Filmscharnier, bevorzugt dasselbe Filmscharnier mit welchem auch das jeweilige Segment des Einführabschnitts an den Einfüllstutzenkörper (2) gemäß Anspruch 3 angebunden ist, schwenkbar mit dem Einfüllstutzenkörper (2) verbunden sind.

12. Einfüllstutzen (1) nach einem der Ansprüche 1 bis 11, und insbesondere nach einem der Ansprüche 1 bis 10, wobei der Einfüllstutzenkörper (2) an seinem dem Fahrzeugtank gegenüberliegenden Endbereich ein zweites Verschlusselement (9), insbesondere in Gestalt einer Verschlussklappe, aufweist, welches in einen geschlossenen Zustand vorgespannt ist und durch Einführen einer Kraftstoff- oder AdBlue^{Ⓡ}- bzw. Harnstoff- oder Zusatzstoffpistole in den dem Fahrzeugtank gegenüberliegenden Endbereich des Einfüllstutzenkörpers (2) in die geöffnete Stellung bewegt wird.

13. Einfüllstutzen (1) nach einem der Ansprüche 1 bis 12,
wobei der Einführabschnitt (4) der Zapfpistolenführung ausgebildet ist, eine in den Einfüllstutzenkörper (2) aufgenommene Zapfpistole umfangsseitig um mehr als 180°, besonders bevorzugt komplett umlaufend, insbesondere ringförmig, zu umgeben.

14. Kraftstoffeinfüllsystem mit einem Einfüllstutzen (1) nach einem der Ansprüche 1 bis 13, wobei das Kraftstoffeinfüllsystem vorzugsweise ein deckelloses Kraftstoffeinfüllsystem ist.

## Claims

1. A filler neck (1) for filling of a fuel, such as gas or AdBlue^{Ⓡ}/urea, or of an additive, such as water, into a vehicle tank by means of a pump nozzle, wherein the filler neck (1) comprises:
- a filler neck body (2), which is receivable into a filler tube leading to the vehicle tank; and
- a pump nozzle guide having an insertion portion (4) for guiding of a pump nozzle received or to be received into the filler neck body (2) towards the vehicle tank,
wherein the filler neck body (2) and the insertion portion (4) of the pump nozzle guide are formed together as an integral molded part, in particular a plastic injection-molded part;
**characterized in that**:
the insertion portion (4) of the pump nozzle guide comprises a first segment (5) integrally formed with the filler neck body (2) and fixedly connected to the filler neck body (2) in the interior of the filler neck body (2) and at least one second segment (6) hingedly connected to the filler neck body (2), wherein the second segment (6) is pivotable relative to the filler neck body (2) between a first position in which the second segment (6) lies outside of the filler neck body (2) and a second position in which the second segment (6) lies within the filler neck body (2) and, together with the first segment (5), forms the guide of a pump nozzle received in the filler neck (2) towards the vehicle tank.

2. The filler neck (1) according to claim 1,
wherein the at least one second segment (6) is connected to the filler neck body (2) in a pivotable manner relative to the filler neck body (2) via at least one film hinge (7), wherein a pivot axis defined by the film hinge (7) preferably extends parallel to the longitudinal axis of the filler neck body (2).

3. The filler neck (1) according to claim 1 or 2,
wherein the filler neck body (2) comprises at least regionally a cylindrical lateral surface having a window region (8), wherein the window region (8) is closed when the at least one second segment (6) is pivoted into the filler neck body (2) and lies in its second position.

4. The filler neck (1) according to any one of claims 1 to 3,
wherein the at least one second segment (6) of the insertion portion (4) comprises at least one latching or locking element for fixing the second segment (6) to the filler neck body (2) when the second segment (6) is pivoted into the filler neck body (2) and lies in its second position.

5. The filler neck (1) according to any one of claims 1 to 4, wherein the filler neck (1) further comprises:
- a first closure element (3), in particular in the form of a closure flap, which is associated with the end region of the filler neck body (2) facing the vehicle tank and which, in its closed position, closes the passageway to the vehicle tank,
wherein preferably the first closure element (3) is biased into its closed position.

6. The filler neck (1) according to any one of claims 1 to 5,
wherein the insertion portion (4) of the pump nozzle guide narrows at least regionally towards the vehicle tank, wherein a narrow cross-section of the insertion portion (4) of the pump nozzle guide is larger than the cross-section of a gasoline nozzle or an auxiliary nozzle, e.g. AdBlue^{Ⓡ}/urea nozzle or water nozzle, and smaller than the cross-section of a diesel nozzle, or larger than the cross-section of an auxiliary nozzle and smaller than the cross-section of a gasoline nozzle.

7. The filler neck (1) according to any one of claims 1 to 6, wherein the filler neck (1) further comprises:
- an anti-misfueling mechanism, preferably as a subregion in the form of the insertion portion, having an actuating element, preferably an actuating ring or actuating ring segment of a springy material or with a radial preloading, preferably having at least one axially parallel gap,
wherein the actuating element, preferably the actuating ring, preferably at its end facing the vehicle tank, preferably on at least one side of the at least one gap, comprises a locking portion, wherein the locking portion directly or indirectly engages with the first closure element (3) and holds the first closure element (3) in its closed position, wherein the locking portion releases the first closure element (3) when the actuating element, preferably the actuating ring, is opened up by a pump nozzle.

8. The filler neck (1) according to claim 7,
wherein the filler neck (1) is configured such that an opening up of the actuating element is limited by a stop, at least when the filler neck is inserted in the filling tube, preferably such that an opening up of the actuating element is only possible as far as necessary for the preferably next larger pump nozzle outer diameter.

9. The filler neck (1) according to claim 7 or 8,
wherein the actuating element is pivotably connected to the filler neck body (2) and is pivotable or foldable into the filler neck body (2); or
wherein the actuating element is constructed from at least two segments, preferably two annular segments, wherein each segment of the actuating element is pivotably connected to the filler neck body (2) and is pivotable or foldable into the filler neck body (2).

10. The filler neck (1) according to any one of claims 7 to 9,
wherein the actuating element or the segments of the actuating element and the filler neck body (2) are formed together as an integral molded part, and in particular a plastic injection-molded part.

11. The filler neck (1) according to any one of claims 7 to 10,
wherein the actuating element is pivotably connected to the filler neck body (2) via at least one film hinge, preferably the same film hinge with which the respective segment of the insertion portion is also connected to the filler neck body (2) according to claim 3; or wherein the segments of the actuating element are pivotably connected to the filler neck body (2) via at least one film hinge, preferably the same film hinge with which the respective segment of the insertion portion is also connected to the filler neck body (2) according to claim 3.

12. The filler neck (1) according to any one of claims 1 to 11, and in particular according to any one of claims 1 to 10, wherein the filler neck (2) comprises at its end region opposite the vehicle tank a second closure element (9), in particular in the form of a closure flap, which is biased into a closed state and is moved into its opened position by the insertion of a fuel nozzle or AdBlue^{Ⓡ}/urea nozzle or additive nozzle into the end region of the filler neck body (2) opposite the vehicle tank.

13. The filler neck (1) according to any one of claims 1 to 12,
wherein the insertion portion (4) of the pump nozzle guide is configured in order to surround a pump nozzle received in the filler neck body (2) peripherally by more than 180°, particularly preferably completely circumferentially, in particular annularly.

14. A fuel filling system having a filler neck (1) according to any one of claims 1 to 13, wherein the fuel filling system is preferably a lidless fuel filling system.

## Revendications

1. Goulot de remplissage (1) pour le remplissage d'un réservoir d'un carburant, tel que du gaz ou de l'AdBlue^{Ⓡ}/urée, ou d'un additif, tel que de l'eau, dans un véhicule au moyen d'un injecteur-pompe, dans lequel le goulot de remplissage (1) comprend :
- un corps de goulot de remplissage (2), qui peut être reçu dans un tube de remplissage menant au réservoir du véhicule ; et
- un guide d'injecteur-pompe ayant une partie d'insertion (4) pour le guidage d'un injecteur-pompe reçu ou devant être reçu dans le corps de goulot de remplissage (2) vers le réservoir de véhicule,
dans lequel le corps de goulot de remplissage (2) et la partie d'insertion (4) du guide d'injecteur-pompe sont formés ensemble en tant que pièce moulée d'un seul tenant, en particulier une pièce moulée par injection de plastique ;
**caractérisé en ce que** :
la partie d'insertion (4) du guide d'injecteur-pompe comprend un premier segment (5) formé d'un seul tenant avec le corps de goulot de remplissage (2) et relié de manière fixe au corps de goulot de remplissage (2) à l'intérieur du corps de goulot de remplissage (2) et au moins un deuxième segment (6) relié de manière articulée au corps de goulot de remplissage (2), dans lequel le deuxième segment (6) peut pivoter par rapport au corps de goulot de remplissage (2) entre une première position dans laquelle le deuxième segment (6) se situe à l'extérieur du corps de goulot de remplissage (2) et une deuxième position dans laquelle le deuxième segment (6) se situe à l'intérieur du corps de goulot de remplissage (2) et, ensemble avec le premier segment (5), forme le guide d'un injecteur-pompe reçu dans le goulot de remplissage (2) vers le réservoir du véhicule.

2. Goulot de remplissage (1) selon la revendication 1, dans lequel l'au moins un deuxième segment (6) est relié au corps de goulot de remplissage (2) de manière pivotante par rapport au corps de goulot de remplissage (2) via au moins une charnière film (7), dans lequel un axe de pivotement défini par la charnière film (7) s'étend de préférence parallèlement à l'axe longitudinal du corps de goulot de remplissage (2).

3. Goulot de remplissage (1) selon la revendication 1 ou 2,
dans lequel le corps de goulot de remplissage (2) comprend au moins localement une surface latérale cylindrique ayant une zone de fenêtre (8), dans lequel la zone de fenêtre (8) est fermée lorsque l'au moins un deuxième segment (6) est pivoté dans le corps de goulot de remplissage (2) et se trouve dans sa deuxième position.

4. Goulot de remplissage (1) selon l'une quelconque des revendications 1 à 3,
dans lequel l'au moins un deuxième segment (6) de la partie d'insertion (4) comprend au moins un élément de blocage ou de verrouillage pour la fixation du deuxième segment (6) au corps de goulot de remplissage (2) lorsque le deuxième segment (6) est pivoté dans le corps de goulot de remplissage (2) et se trouve dans sa deuxième position.

5. Goulot de remplissage (1) selon l'une quelconque des revendications 1 à 4, dans lequel le goulot de remplissage (1) comprend en outre :
- un premier élément de fermeture (3), en particulier sous la forme d'un clapet de fermeture, qui est associé à la zone d'extrémité du corps de goulot de remplissage (2) faisant face au réservoir de véhicule et qui, dans sa position fermée, ferme le passage vers le réservoir de véhicule,
dans lequel de préférence le premier élément de fermeture (3) est sollicité dans sa position fermée.

6. Goulot de remplissage (1) selon l'une quelconque des revendications 1 à 5,
dans lequel la partie d'insertion (4) du guide d'injecteur-pompe se rétrécit au moins localement vers le réservoir du véhicule, dans lequel une section transversale étroite de la partie d'insertion (4) du guide d'injecteur-pompe est plus grande que la section transversale d'un injecteur à essence ou d'un injecteur auxiliaire, par exemple un injecteur à AdBlue^{Ⓡ}/urée ou un injecteur à eau, et plus petite que la section transversale d'un injecteur à diesel, ou plus grande que la section transversale d'un injecteur auxiliaire et plus petite que la section transversale d'un injecteur à essence.

7. Goulot de remplissage (1) selon l'une quelconque des revendications 1 à 6, dans lequel le goulot de remplissage (1) comprend en outre :
- un mécanisme anti-erreur de carburant, de préférence comme une sous-zone sous la forme de la partie d'insertion, ayant un élément d'actionnement, de préférence une bague d'actionnement ou un segment de bague d'actionnement d'un matériau élastique ou avec une précontrainte radiale, ayant de préférence au moins un espace axialement parallèle,
dans lequel l'élément d'actionnement, de préférence la bague d'actionnement, de préférence à son extrémité faisant face au réservoir du véhicule, de préférence sur au moins un côté de l'au moins un espace, comprend une partie de verrouillage, dans lequel la partie de verrouillage s'engage directement ou indirectement avec le premier élément de fermeture (3) et maintient le premier élément de fermeture (3) dans sa position fermée, dans lequel la partie de verrouillage libère le premier élément de fermeture (3) lorsque l'élément d'actionnement, de préférence la bague d'actionnement, est ouvert par un injecteur-pompe.

8. Goulot de remplissage (1) selon la revendication 7, dans lequel le goulot de remplissage (1) est configuré de sorte qu'une ouverture de l'élément d'actionnement est limitée par une butée, au moins lorsque le goulot de remplissage est inséré dans le tube de remplissage, de préférence de sorte qu'une ouverture de l'élément d'actionnement n'est possible que dans la mesure nécessaire pour le diamètre extérieur d'injecteur-pompe de préférence immédiatement supérieur.

9. Goulot de remplissage (1) selon la revendication 7 ou 8,
dans lequel l'élément d'actionnement est relié de manière pivotante au corps de goulot de remplissage (2) et peut pivoter ou être plié dans le corps de goulot de remplissage (2) ; ou
dans lequel l'élément d'actionnement est construit à partir d'au moins deux segments, de préférence deux segments annulaires, dans lequel chaque segment de l'élément d'actionnement est relié de manière pivotante au corps de goulot de remplissage (2) et peut pivoter ou être plié dans le corps de goulot de remplissage (2) .

10. Goulot de remplissage (1) selon l'une quelconque des revendications 7 à 9,
dans lequel l'élément d'actionnement ou les segments de l'élément d'actionnement et le corps de goulot de remplissage (2) sont formés ensemble comme une pièce moulée d'un seul tenant, et en particulier une pièce moulée par injection en plastique.

11. Goulot de remplissage (1) selon l'une quelconque des revendications 7 à 10,
dans lequel l'élément d'actionnement est relié de manière pivotante au corps de goulot de remplissage (2) via au moins une charnière film, de préférence la même charnière film avec laquelle le segment respectif de la partie d'insertion est également relié au corps de goulot de remplissage (2) selon la revendication 3 ; ou dans lequel les segments de l'élément d'actionnement sont reliés de manière pivotante au corps de goulot de remplissage (2) via au moins une charnière film, de préférence la même charnière film avec laquelle le segment respectif de la partie d'insertion est également relié au corps de goulot de remplissage (2) selon la revendication 3.

12. Goulot de remplissage (1) selon l'une quelconque des revendications 1 à 11, et en particulier selon l'une quelconque des revendications 1 à 10, dans lequel le goulot de remplissage (2) comprend sur sa zone d'extrémité à l'opposé du réservoir du véhicule, un deuxième élément de fermeture (9), en particulier sous la forme d'un clapet de fermeture, qui est sollicité dans un état fermé et qui est déplacé dans sa position ouverte par l'insertion d'un injecteur à carburant ou à AdBlue^{Ⓡ}/urée ou d'un injecteur à additif dans la zone d'extrémité du corps de goulot de remplissage (2) à l'opposé du réservoir du véhicule.

13. Goulot de remplissage (1) selon l'une quelconque des revendications 1 à 12,
dans lequel la partie d'insertion (4) du guide d'injecteur-pompe est configurée afin d'entourer un injecteur-pompe reçu dans le corps de goulot de remplissage (2) périphériquement de plus de 180°, de manière particulièrement préférable complètement circonférentiellement, en particulier annulairement.

14. Système de remplissage de carburant ayant un goulot de remplissage (1) selon l'une quelconque des revendications 1 à 13, dans lequel le système de remplissage de carburant est de préférence un système de remplissage de carburant sans couvercle.
